Europäisches Patentamt

European Patent Office  (11) Publication number: **0 130 562**

Office européen des brevets  A1

(12) **EUROPEAN PATENT APPLICATION**

(21) Application number: 84107454.5  (51) Int. Cl.⁴: **B 31 B 3/00**

(22) Date of filing: 27.06.84

(30) Priority: 29.06.83 US 509165

(71) Applicant: **International Paper Company, 77 West 45th Street New York, New York 10036 (US)**

(43) Date of publication of application: **09.01.85 Bulletin 85/2**

(72) Inventor: **Alexander, Garold Wendell, 6690 Dublin Road, Delaware Ohio 43015 (US)**

(84) Designated Contracting States: **AT BE CH DE FR GB IT LI LU NL SE**

(74) Representative: **Patentanwälte Kohler - Schwindling - Späth, Hohentwielstrasse 41, D-7000 Stuttgart 1 (DE)**

(54) Combination draw ring with a die set.

(57) A combination draw ring with a die set is disclosed for use in forming a multi-compartmented tray (10) from a piece of sheet material (118) without tearing or bowing. The draw ring (98) has an outer part (102) for lying on the portion of the sheet material that will become the tray periphery, and an inner part (104) for overlying at least part of the portion of the sheet material that will become the ribs (18, 20, 22) of the tray.

EP 0 130 562 A1

COMBINATION DRAW RING WITH A DIE SET

FIELD OF THE INVENTION

The present invention relates to the combination of a draw ring with a die set such, for example, as described and claimed in our concurrently filed application Serial No.        (OLP      ).

BACKGROUND OF THE INVENTION

The formation of trays having several compartments separated by ribs whose height approaches that of the tray sidewall presents a difficult problem. As expressed in our concurrently filed application, the stresses created in the rib regions during forming of the tray often cause the material to tear, tending to make the production of such trays unreliable and uneconomical. As noted in that application, one early approach to the solution of the tearing problem is disclosed in U.S. Patent 2,760,231, another approach being disclosed in U.S. Patents 4,149,841 and 4,246,223.

Our concurrently filed application discloses a solution to the tearing problem. The present application additionally concerns other defects normally encountered in forming multi-compartment trays, such as bowing (curvature of the tray bottom, especially in the vicinity of the rib separating, for example, the smaller compartments of three-compartment trays), wrinkling and to the presence of aesthetically unacceptable parting lines that occur when a compartment is formed in two stages as in the prior art.

## SUMMARY OF THE INVENTION

The defects referred to are avoided in accordance with the invention by the combination of a draw ring with a die set comprising a male and a female die movable relative to each other from a first spaced apart position toward a second abutting position for gripping a sheet material between them to form the sheet material into a multi-compartmented tray, said male die having compartment forming elements, characterized by the draw ring of the combination having an outer part disposed in surrounding relation to the compartment forming elements of the male die and an inner part shaped in relation to the compartment forming elements to ensure gripping at least the portions of the sheet material that are to be formed into ribs defining the tray compartments.

A die set with which the invention can be used is the subject of our mentioned concurrently filed application, the constructional details of which are repeated herein for purpose of completeness of disclosure.

In the combination hereinafter disclosed, the draw ring preferably moves approximately in tandem with the movable compartment former of the movable die, engaging the material to control wrinkles and reduce the risk of bowing, risk of tearing being further minimized through use of the draw ring in connection with a die set. Obviously, the invention can be used with a conventional die set, that is, one not utilizing a die set such as disclosed in our concurrently filed application using a preformer.

Objects and features of the invention will be better understood from a consideration of the following detailed description of one preferred embodiment of the invention taken in conjunction with the accompanying drawings, wherein like reference characters refer to like elements throughout.

BRIEF DESCRIPTION OF THE FIGURES

Figure 1 is a perspective view of a three-compartment tray made using the draw ring of the invention.

Figure 2 is a plan view of a female die with which the draw ring of the invention can suitably be used.

Figure 3 is a plan view of a male die for use with the female die of Figure 2.

Figure 4 is a cross-sectional view of the die set as seen from section line 4-4 of Figure 2.

Figure 5 is a cross-sectional view of the die set of Figure 4 as seen from section line 5-5 of Figure 3.

Figure 6 is a perspective view of the preferred embodiment of the draw ring of the invention.

Figures 7-9 are schematic cross-sectional views showing the draw ring of the invention in use with the die set of Figures 2-5.

DESCRIPTION OF THE PREFERRED EMBODIMENT

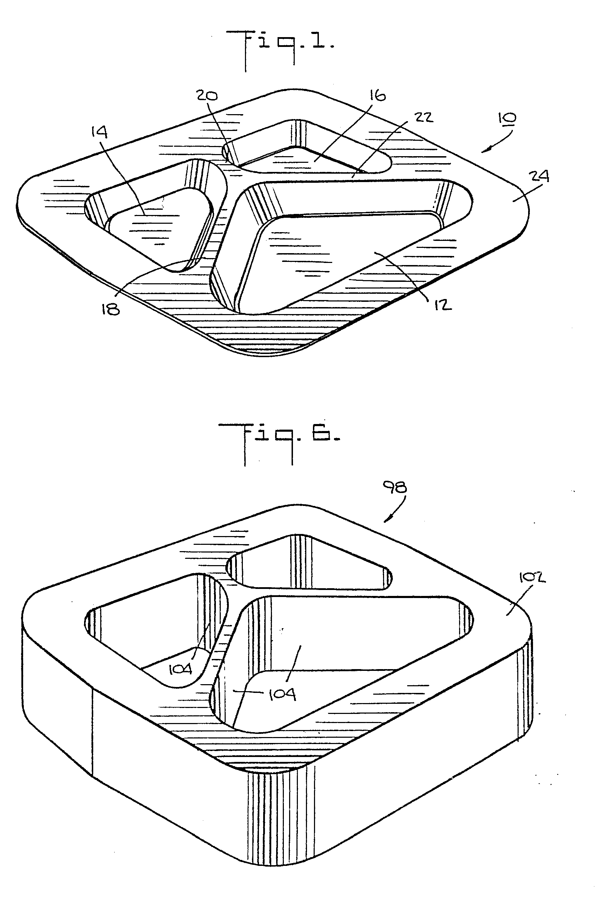

Figure 1 shows by way of example a three-compartmented tray 10 that can be manufactured without bowing, wrinkling and tearing using the present invention. The tray 10 is formed integrally from a piece of sheet material such as paperboard stock. The three compartments 12, 14, 16 are separated by ribs 18, 20, 22 and surrounded by a sidewall 24. In the version shown, one compartment 12 is larger than the other two, which are equal in size, and the ribs 18, 20, 22 are substantially as high as the sidewall 24.

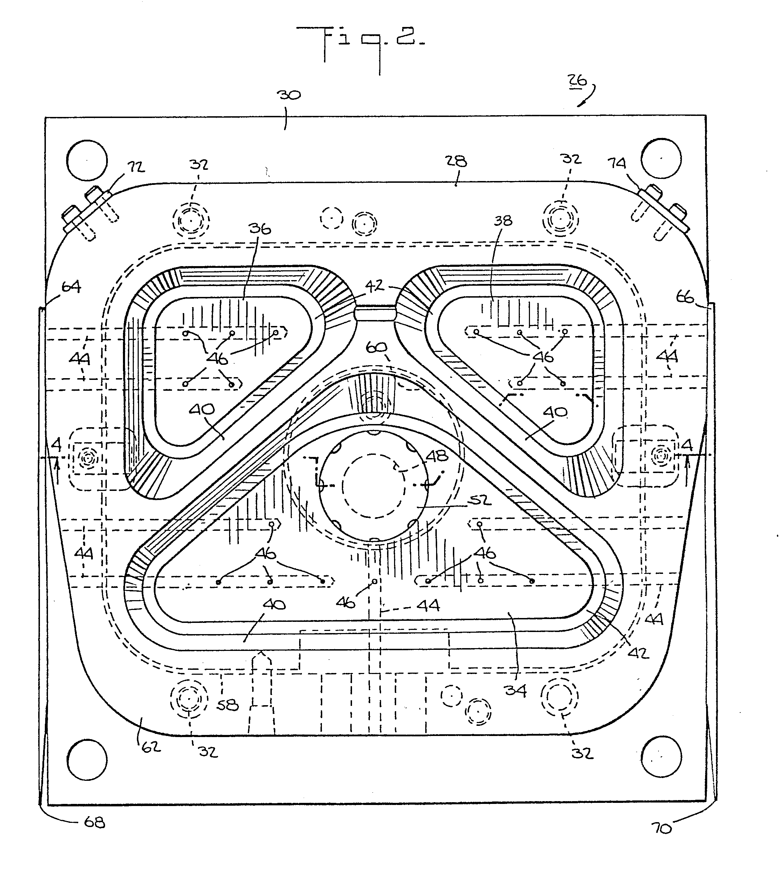

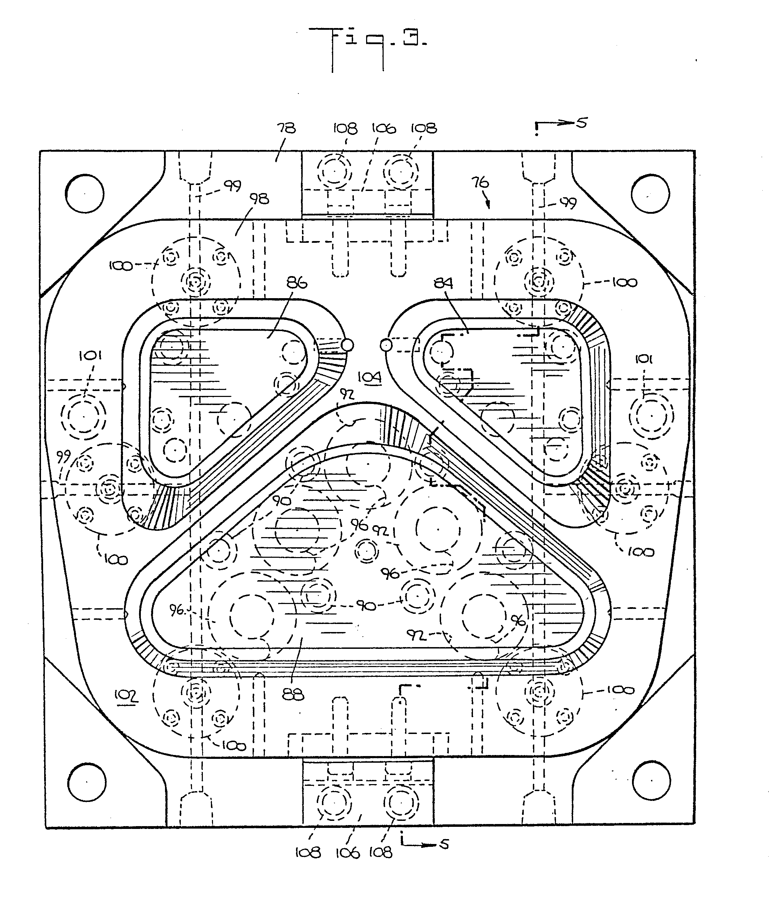

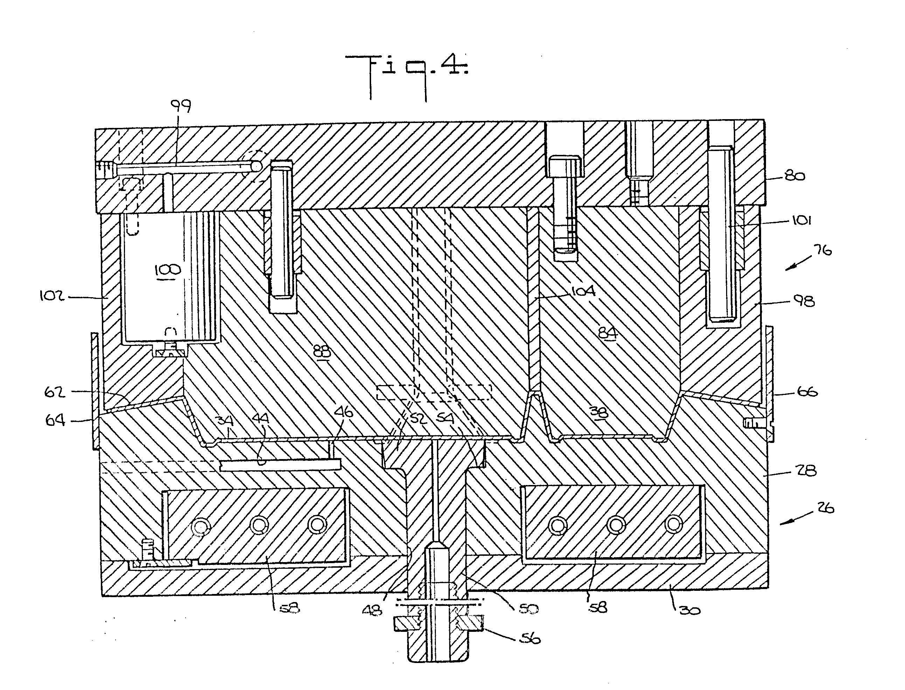

Figures 2, 4 and 5 show the female die 26 of a die set with which the draw ring of the invention can be used especially effectively. The female die 26 comprises a metal block 28 having a contour of the approximate shape of the tray 10 to be formed, and mounted on a rectangular block 30 by means of bolts 32 or the like. The female die 26 has three approximately triangular depressions 34, 36, 38, which are for forming the three compartments 12, 14, 16 of the tray 10 of Figure 1. Each depression has inwardly-sloping walls 40 that define the shape of the tray compartments. The perimeter 42 of the bottom of each depression is deeper than the central part of the depression, to provide peripheral gutters in the tray compartments.

Horizontal vent lines 44 in the female die body 28 communicate via small apertures or vertical bores 46 with the depressions 34, 36, 38 and serve to remove air from the depressions during the forming process.

The largest depression 34 has one corner overlying a central vertical bore 48 in which is slidably received a knock-out piston 50 having a disc-shaped flange 52 at its upper end. The flange 52 is normally received in a shallow well 54 in the upper surface of the depression 34. After a tray has been formed, the piston 50 is raised to eject the tray from the female die 26. The piston 50 is provided with a stop element 56 below the die body 28 to limit the upward travel of the piston 50.

The body 28 of the die 26 contains a heater block 58, which has the shape of a rectangular prism with a cylindrical hole 60 in the middle to accommodate the knock-out piston 50. The heater block 58 provides the heat required for the forming process.

The peripheral portion 62 of the female die 26 serves as a table against which the piece of material is clamped during forming.

The die set shown is designed for use with blanks of material, although those skilled in the art will be able readily to modify it for use with a web. Two flat blades 64, 66 each have one end attached to the sides of the female die 26, the free ends 68, 70 of the blades being slightly tapered and serving as guides to direct a blank into the correct position resting on the female die 26. To aid in this positioning, two vertical stop plates 72, 74 are secured to the rear edge of the female die 26.

Figures 3-5 show the male die 76 corresponding to the female die 26 of Figure 2, in plan view. The male die 76 is mounted to suitable moving means (not shown) for vertical reciprocation relative to the female die 26. In the version shown, the female die is intended to be stationary, although the female die could instead be reciprocated or if desired both dies can be moved. Also, the male die can be placed above or below the female die.

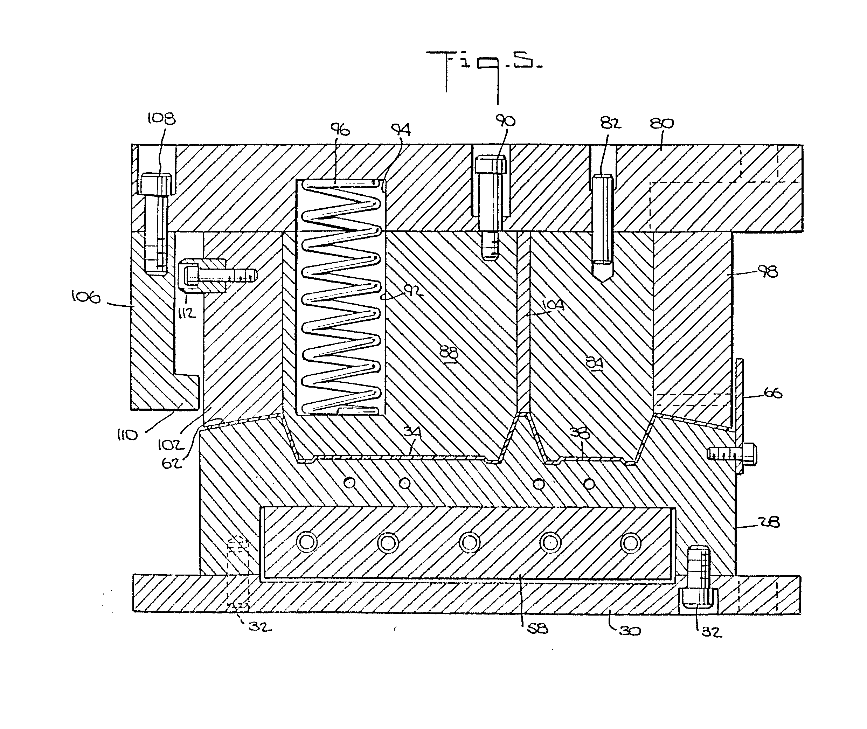

The male die 76 has a main body 80, which is essentially a horizontal plate in the version shown. Permanently secured to the main die body 80 by means of dowels 82 (see Figure 5) are two compartment-formers 84, 86 whose lower ends are shaped to impart the desired form to the corresponding tray compartments. In the version shown, formers 84, 86 are equal in size and form the smaller compartments 14, 16 of the tray 10.

As seen in Figure 5, the former 88 for the largest compartment 12 is attached to the die body 80 by means of a plurality of shoulder bolts 90 having their heads received in vertical bores in the die body, allowing the main compartment-former 88, or "preformer", to move vertically relative to tme main body 80 of the die 76. Five cylindrical bores 92 are provided in the upper surface of the preformer 88, and additional bores 94 of the same diameter are located immediately overhead in the die body 80 (see Figure 5). These bores 92, 94 house strong coil springs 96 (indicated schematically) whose function is to urge the preformer 88 toward the female die 26. The springs 96 are preloaded slightly to urge the preformer 88 downward from the male die body 80. As shown in Figure 3, the five such springs 96 are arranged in the configuration of a "V" whose apex is near the corner of preformer 88 nearest the center of die 76.

Also mounted on the underside of the main body 80 of the male die 76 is the draw ring 98 of the invention, which serves to clamp the periphery of the piece of material during forming to control wrinkles. The draw ring 98 is urged downward from the die body 80 by means of six air cylinders 100 supplied by lines 99 and arranged in a hexagon and secured to both the die body 80 and the draw ring 98. Two dowel pins 101 and bushings guide the vertical movement of the draw ring relative to die body 80.

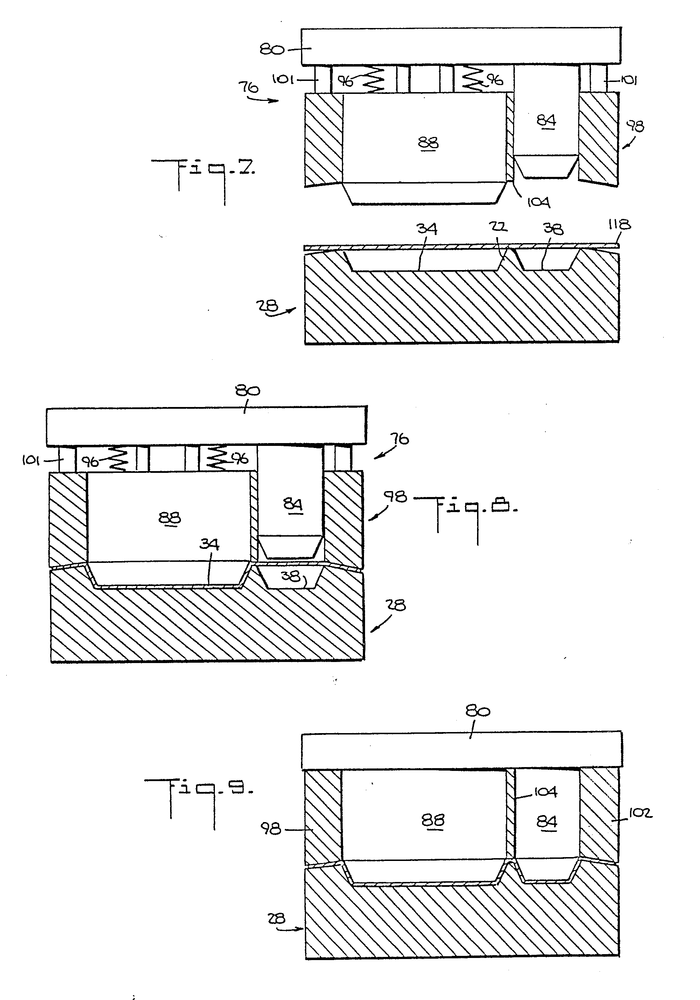

As shown in Figure 6, the draw ring 98 has a perimetral outer part 102 that surrounds the preformer 88 and the other two compartment-formers 84, 86, and an inner portion 104 shaped to clamp the workpiece to the portions of the female die 26 that correspond to the ribs of the finished tray. This portion 104 of the draw ring 98 prevents stresses, in the material being drawn, from traveling from one tray compartment to another and similarly prevents the material itself from creeping among the compartments. This aids in controlling wrinkles and in eliminating bowing.

L-shaped draw ring stop elements 106 are secured by bolts 108 to the underside of the main die body 80. The inwardly extending legs 110 of the L-shaped elements 106 cooperate with respective radially outward-extending stop pads 112 secured to the outer draw ring surface to limit the downward movement of the draw ring 98 (see Figure 5).

In operation, as shown in Figures 7-9, a blank 118 is fed into position resting on the lower (female) die 26, as shown in Figure 7. The male die 76 is then lowered by suitable conventional means (not shown). The weight of the preformer 88 and the preloading of the springs 96 cause the preformer 88 to depend from the main die body 80 as seen in Figures 7 and 8. The draw ring 98 is at the lower limit of its travel at the stage of the process illustrated in Figures 7 and 8, the lower surfaces of the draw ring 98 and of the preformer 88 being so related as to form the desired corresponding surfaces of the tray.

The descent of the male die 76 causes the preformer 88 and the draw ring 98 to engage the blank 118 before the rest of the male die 76 does so. When the preformer 88 and, virtually simultaneously, the draw ring 98 contact the blank 118, the draw ring 98 clamps the periphery of the blank 118, while the preformer 88 begins to form the first tray compartment 12. Continued descent of the male die 76 completes the formation of the large compartment 12. This stage is shown in Figure 8.

Further descent of the male die 76 causes the remaining two formers 84, 86 to contact the blank 118 and to form the other two tray compartments 14, 16, as shown in Figure 9.

It has been found that use of the draw ring of the invention eliminates bowing of the tray bottom and aids in controlling wrinkling of the blank much better than do conventional draw rings that contact only the periphery of the workpiece.

To provide resistance to the vertical movement of the draw ring 98, brake pads or springs can be employed in place of the air cylinders 100.

Although the invention has been described with reference to one preferred embodiment thereof, many variations and modifications thereof will now be apparent

0130562

to those skilled in the art.  Accordingly, the scope of
the invention is to be limited, not by the details of
the embodiment illustratively described herein, but only
by the terms of the appended claims.

CLAIMS

1.      The combination of a draw ring with a die set
comprising a male and a female die movable relative to
each other from a first spaced apart position toward a
second abutting position for gripping a sheet material
between them to form the sheet material into a multi-
compartmented tray, said male die having compartment
forming elements, characterized by the draw ring of the
combination having an outer part (102) disposed in
surrounding relation to the compartment forming elements
of the male die and an inner part (104) shaped in relation
to the compartment forming elements to ensure gripping
at least the portions of the sheet material that are to
be formed into ribs defining the tray compartments.

2.      The draw ring of claim 1, characterized in
that the inner part of the draw ring is shaped to provide
ribs which with the compartments formed by the compartment
forming elements define three tray compartments.

0130562

Fig.1.

Fig.6.

0130562

Fig.2.

Fig.3.

Fig.4.

Fig.5.

6 / 6

0130562

Fig.7.

Fig.8.

Fig.9.

## DOCUMENTS CONSIDERED TO BE RELEVANT

EP 84107454.5

| Category | Citation of document with indication. where appropriate, of relevant passages | Relevant to claim | CLASSIFICATION OF THE APPLICATION (Int. Cl. ³) |
|---|---|---|---|
| A | GB - A - 2 018 685 (PEERLESS MACHINE & TOOL CORP.)<br><br>* Totality *<br><br>———— | 1,2 | B 31 B 3/00 |

|  |  |  | TECHNICAL FIELDS SEARCHED (Int. Cl. ³) |
|---|---|---|---|
|  |  |  | B 31 B |

The present search report has been drawn up for all claims

| Place of search | Date of completion of the search | Examiner |
|---|---|---|
| VIENNA | 21-09-1984 | HABART |